# FASCICULE DE BREVET EUROPEEN

(11) **EP 3 980 327 B1**
(45) Date de publication et mention de la délivrance du brevet: **09.08.2023**
(21) Numéro de dépôt: 20730026.0
(22) Date de dépôt: 03.06.2020
(51) Int. Cl.: B64C 1/14

(54) **PORTE D'AÉRONEF MUNIE D'UN LEVIER D'OUVERTURE DE SECOURS PAR L'EXTÉRIEUR**
FLUGZEUGTÜR MIT EINEM HEBEL ZUR NOTÖFFNUNG VON AUSSEN
AIRCRAFT DOOR PROVIDED WITH A LEVER FOR EMERGENCY OPENING FROM OUTSIDE

(30) Priorité: 05.06.2019 FR 1905935
(43) Date de publication de la demande: 13.04.2022
(73) Titulaire: Latecoere, 31500 Toulouse (FR)
(72) Inventeur: ROUZADE, Emmanuel, 31660 Bessieres Occitaine (FR)
(74) Mandataire: Junca, Eric
(86) Numéro de dépôt international: PCT/EP2020/065333
(87) Numéro de publication internationale: WO 2020/245188

(56) Documents cités:
- US-A- 4 125 235
- US-A- 5 031 863
- US-A1- 2003 213 095
- US-B2- 9 033 277

## Description

### DOMAINE TECHNIQUE

L'invention concerne le domaine de l'aéronautique et concerne plus particulièrement les moyens d'ouverture de secours par l'extérieur dont sont généralement munies les portes d'aéronef.

Les aéronefs comportent généralement des moyens permettant à des intervenants extérieurs à l'aéronef d'ouvrir, en cas d'urgence, les portes de l'aéronef. Ces moyens comportent généralement un levier d'ouverture de secours qui peut être saisi par l'extérieur et qui permet à ces intervenants extérieurs, par exemple des équipes de secours, de déverrouiller et d'ouvrir la porte en actionnant une poignée liée à ce levier d'ouverture de secours.

### ART ANTÉRIEUR

Les leviers d'ouverture de secours par l'extérieur sont déjà présents sur les portes d'un grand nombre d'aéronefs et sont généralement imposés par la règlementation. Ces leviers d'ouverture de secours sont placés sur la paroi externe de la porte d'aéronef et comportent des surfaces aérodynamiques leur permettant de s'escamoter dans le profil de la porte sans perturber le comportement aérodynamique de l'aéronef dans cette zone. Les leviers d'ouverture de secours sont ainsi disposés dans le prolongement de la paroi externe de la porte par leurs surfaces aérodynamiques et la porte est elle-même disposée dans le prolongement du fuselage de l'avion.

Une porte d'aéronef munie d'un levier d'ouverture de secours par l'extérieur est présentée dans le brevet US 4125235A et illustre cette contrainte liée à l'aérodynamisme qui limite les possibilités de positionnement du levier d'ouverture de secours au sein de la porte d'aéronef et qui limite également sa capacité de manoeuvre.

### EXPOSÉ DE L'INVENTION

L'invention a pour but d'améliorer les portes d'aéronef de l'art antérieur en ce qui concerne le fonctionnement des leviers d'ouverture de secours par l'extérieur.

À cet effet, l'invention vise une porte d'aéronef comportant une structure de porte, une paroi externe fixée sur la structure de porte, et un levier d'ouverture de secours par l'extérieur disposé dans une fenêtre de levier pratiquée dans la paroi externe. Dans cette porte d'aéronef, le levier d'ouverture de secours par l'extérieur comporte :
- un bras principal muni à l'une de ses extrémités d'une poignée et à l'autre de ses extrémités d'un arbre de transmission de mouvement d'ouverture, cet arbre de transmission étant fixe par rapport au bras principal, le bras principal comportant une première surface aérodynamique s'étendant de la poignée à l'arbre de transmission, l'arbre de transmission étant monté pivotant sur la structure de porte de sorte que le bras principal est mobile entre deux positions : - une position escamotée dans laquelle la première surface aérodynamique est disposée dans les contours de la fenêtre de levier, dans le prolongement de la paroi externe ; - une position déployée dans laquelle le bras principal est en dehors de la fenêtre de levier, cette position déployée correspondant à une configuration d'activation de l'ouverture de secours par l'extérieur ;
- un capotage profilé comportant une deuxième surface aérodynamique, ce capotage profilé étant monté pivotant sur le bras principal entre : - une position occultante où la deuxième surface aérodynamique est alignée dans le prolongement de la première surface aérodynamique ; - une position écartée où la deuxième surface aérodynamique est rabattue en direction de la première surface aérodynamique ;
- une butée d'entrainement adaptée à entraîner en rotation le capotage profilé de sa position occultante vers sa position écartée lorsque le bras principal passe de sa position escamotée à sa position déployée.

Un autre objet de l'invention vise un procédé d'ouverture d'urgence par l'extérieur d'une porte d'aéronef munie d'un levier d'ouverture d'urgence disposé dans une fenêtre de levier de la porte, ce procédé comportant l'étape de pivoter un bras principal du levier d'ouverture d'urgence sur une course angulaire entre une position escamotée et une position déployée, et au cours de cette course angulaire, entraîner en rotation un capotage profilé monté pivotant sur le bras principal entre une position occultante et une position écartée où il est rabattu vers le bras principal.

Dans une telle porte d'aéronef équipée du levier d'ouverture de secours par l'extérieur, le débattement angulaire du levier d'ouverture est indépendant de l'intrusion de ce levier à l'intérieur de la porte lorsque le levier est en position d'ouverture.

Une porte d'aéronef selon l'invention peut ainsi présenter une grande course angulaire pour le levier d'ouverture de secours par l'extérieur tout en subissant une faible intrusion de ce levier au sein de l'épaisseur de la porte, en direction de la cabine de l'aéronef. Ces avantages sont obtenus sans aucune dégradation des qualités aérodynamiques procurées par l'escamotage du levier d'ouverture dans les lignes de la porte lorsque le levier est en position de repos.

À débattement angulaire égal, une telle porte d'aéronef permet de réduire l'intrusion du levier d'ouverture de secours vers l'intérieur de la cabine de l'aéronef et permet donc de réduire la taille et la masse des coffrages étanches qui sont généralement prévus sur les portes d'aéronef pour permettre cette intrusion du levier d'ouverture en maintenant l'étanchéité à l'intérieur de la cabine d'aéronef.

Par ailleurs, les leviers d'ouverture de secours par l'extérieur sont généralement couplés à des moyens d'ouverture de la porte d'aéronef par l'intérieur. Cependant, l'usage et les règlementations imposent généralement que les moyens d'ouverture de la porte par l'intérieur requièrent une force de déclenchement inférieure à celle qui est nécessaire pour ouvrir la porte par l'extérieur. Dans l'art antérieur, les leviers d'ouverture de secours par l'extérieur sont généralement couplés aux moyens d'ouverture de la porte par l'intérieur par l'intermédiaire de mécanismes de démultiplication employant par exemple des pignons et roues dentées ainsi que des organes de transmission tels que des chaînes ou des biellettes. Une porte d'aéronef selon l'invention permet de simplifier considérablement un tel assemblage en permettant de coupler rigidement un levier d'ouverture de secours par l'extérieur à des moyens d'ouverture par l'intérieur, en supprimant un nombre conséquent de pièces mécaniques mobiles, ce qui accroît la fiabilité et réduit le cout de production et de maintenance d'une telle porte. Dans un tel cas, les forces requises pour ouvrir la porte par l'intérieur, d'une part, et par l'extérieur, d'autre part, sont alors calibrée par les bras de levier et les courses respectives, d'une part, du levier d'actionnement des moyens d'ouverture intérieurs et, d'autre part, du levier d'ouverture de secours par l'extérieur. La grande plage de débattement angulaire permise pour le levier d'ouverture de secours par l'extérieur permet l'adaptation nécessaire du bras de levier et de la course de levier autorisant ce couplage rigide du levier d'ouverture de secours par l'extérieur et des moyens d'ouverture par l'intérieur.

La porte d'aéronef selon l'invention peut comporter les caractéristiques additionnelles suivantes, seules ou en combinaison :
- le levier d'ouverture de secours comporte une surface d'entrainement contre laquelle la butée d'entrainement est adaptée à venir en butée pour l'entrainement en rotation du capotage profilé par le bras principal ;
- la butée d'entrainement est fixée sur le bras principal et la surface d'entrainement est située sur le capotage profilé ;
- le levier d'ouverture de secours comporte une butée de retour adaptée à entraîner en rotation le capotage profilé de sa position écartée vers sa position occultante lorsque le bras principal passe de sa position déployée à sa position escamotée ;
- le levier d'ouverture de secours comporte une surface de retour contre laquelle la butée de retour est adaptée à venir en butée pour l'entrainement en rotation du capotage profilé par le bras principal ;
- la butée de retour est fixée sur le bras principal et la surface de retour est située sur le capotage profilé ;
- une liaison pivot entre le bras principal et le capotage profilé comporte deux flasques montés par ajustement glissant sur l'arbre de transmission ;
- le bras principal comporte une embase sur laquelle sont montés l'arbre de transmission et la butée d'entrainement ;
- le capotage profilé comporte une languette adaptée à venir en butée contre la paroi externe lorsque le capotage profilé est dans sa position occultante ;
- le levier d'ouverture d'urgence comporte un ressort de torsion sollicitant le capotage profilé vers une position où la deuxième surface aérodynamique est rabattue vers la première surface aérodynamique.

### PRÉSENTATION DES FIGURES

D'autres caractéristiques et avantages de l'invention ressortiront de la description non limitative qui suit, en référence aux dessins annexés dans lesquels :
[Fig.1] La figure 1 représente une porte d'aéronef selon l'invention ;
[Fig.2] La figure 2 représente en perspective le levier d'ouverture de secours par l'extérieur de la porte d'aéronef de la figure 1 ;
[Fig.3] La figure 3 est une vue partielle en coupe de la porte d'aéronef de la figure 1, le levier d'ouverture étant en position de repos ;
[Fig.4] La figure 4 est une vue partielle en coupe de la porte d'aéronef de la figure 1, le levier d'ouverture étant entre sa position de repos et sa position d'ouverture ;
[Fig.5] La figure 5 est une vue partielle en coupe de la porte d'aéronef de la figure 1, le levier d'ouverture étant en position d'ouverture.

### DESCRIPTION DÉTAILLÉE

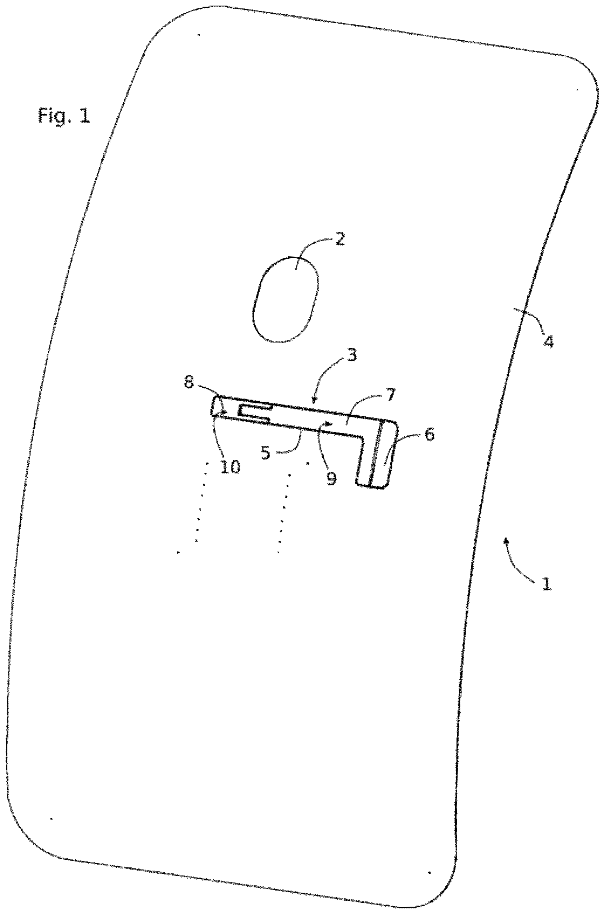

La figure 1 représente une porte d'aéronef vue de l'extérieur. Cette porte d'aéronef 1 est destinée à fermer une ouverture dans le fuselage de l'aéronef et peut être par exemple une porte permettant l'accès régulier à l'aéronef ou une porte d'issue de secours.

Dans le présent exemple, la porte 1 comprend un hublot 2 ainsi qu'un levier d'ouverture de secours par l'extérieur 3. La figure 1 représente la porte 1 vue depuis l'extérieur de l'aéronef. La porte d'aéronef 1 est réalisée de manière classique et comporte une structure de porte, généralement faite de poutres, (non visible sur la figure 1) sur laquelle est fixée une paroi externe 4 couramment dénommée « peau ». La paroi externe 4 forme la surface extérieure de l'aéronef au niveau de la porte 1. En cas d'ouverture de secours par un opérateur situé à l'extérieur de l'aéronef, le levier d'ouverture de secours 3 est prévu pour être actionné depuis la face de la porte 1 qui est visible sur cette figure 1.

Sur la figure 1, le levier d'ouverture de secours 3 est en position de repos. Dans cette position, le levier d'ouverture 3 est dans le prolongement de la paroi externe 4, c'est-à-dire que le levier 3 forme une continuité de surface avec la paroi externe 4 pour garantir les qualités aérodynamiques de la porte 1.

Le levier d'ouverture 3 est disposé dans une fenêtre de levier 5 pratiquée dans la paroi externe 4. Lorsque le levier d'ouverture 3 est dans sa position de repos, comme illustré à la figure 1, la fenêtre 5 est complètement occultée par le levier d'ouverture 3 et par un volet occultant 6.

Le levier d'ouverture 3 comporte un bras principal 7 et un capotage profilé 8. Le bras principal 7 comporte une première surface aérodynamique 9 et le capotage profilé 8 comporte une deuxième surface aérodynamique 10 qui sont adaptées à occulter la fenêtre 5 en s'inscrivant dans la courbure de la paroi externe 4. Le volet occultant 6 est monté pivotant sur la paroi externe 4 et complète cette occultation.

Les surfaces 9 et 10 sont dites aérodynamiques car elles constituent une portion de la peau extérieure de l'aéronef et contribuent au comportement aérodynamique de l'aéronef. Ces surfaces aérodynamiques sont de préférence lisses et exemptes d'aspérité ou de cavité.

En cas d'urgence, pour actionner le levier d'ouverture de secours 3, l'opérateur situé à l'extérieur de l'aéronef repousse le volet occultant 6 avec sa main, saisit le levier 3 et le tire tout d'abord vers lui.

Dans le présent exemple, le levier d'ouverture 3 pivote autour d'un axe sensiblement vertical, ce qui lui permet un grand débattement angulaire. En effet, les leviers pivotant autour d'un axe sensiblement horizontal présentent une course qui est généralement limitée par la forme de la porte et par la hauteur du levier en position ouverte.

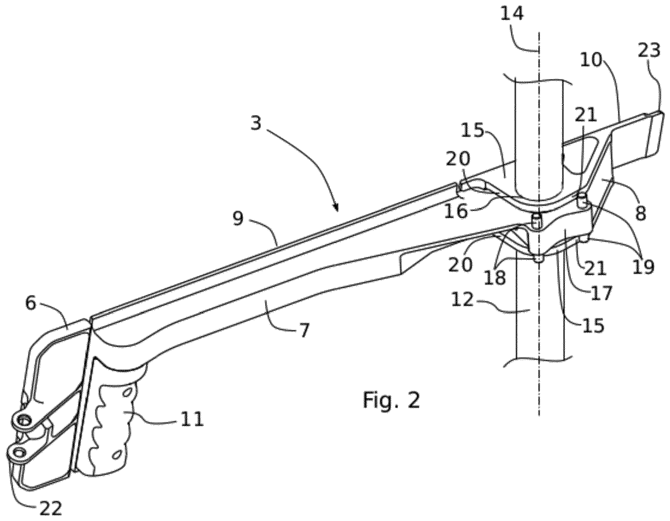

La figure 2 représente en perspective le levier d'ouverture 3 de la figure 1. Le bras principal 7, visible sur cette figure 2, est muni à l'une de ses extrémités d'une poignée 11 et à l'autre de ses extrémités d'un arbre 12 de transmission du mouvement d'ouverture.

L'arbre de transmission 12 et le bras principal 7 sont montés solidaires en rotation par tout moyen, par exemple par un embranchement en force de l'arbre 12 dans un alésage du bras principal 7 ou par un montage à cannelure. Dans le présent exemple, le bras principal 7 comporte à son extrémité une embase 17 dans laquelle est pratiqué un alésage ainsi couplé en rotation avec l'arbre 12.

L'arbre de transmission 12 est monté rotatif sur la structure de porte, autour de son axe longitudinal 14. L'arbre 12 est relié au mécanisme permettant le déverrouillage de la porte 1. Ainsi, lorsque la poignée 11 est actionnée pour faire pivoter le bras principal 7 autour de l'axe longitudinal 14 de l'arbre 12, ce dernier est entraîné en rotation autour de son axe 14 et cette rotation permet le déverrouillage de la porte, par un mécanisme classique (non représenté). Le bras principal 7 est ici directement relié à l'arbre de transmission 12 de manière simple, fiable et peu onéreuse, sans aucun moyen mécanique de démultiplication ou de transmission de mouvements.

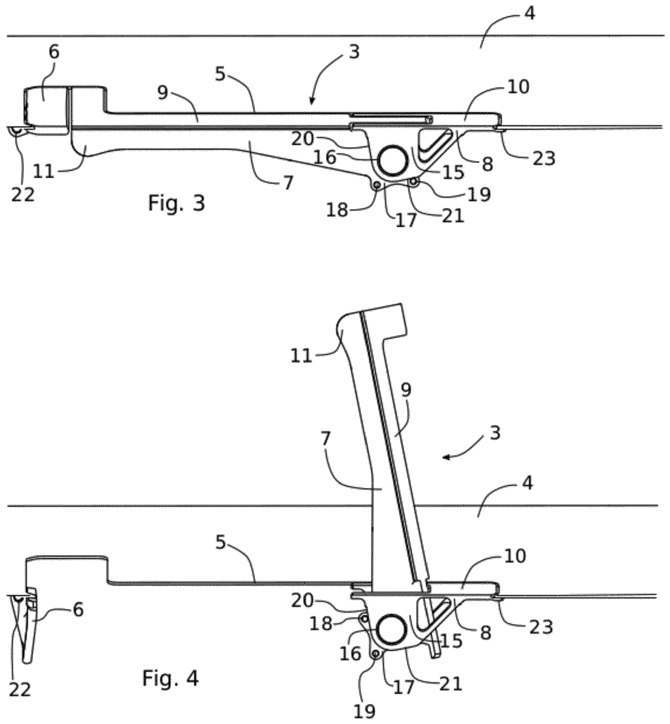

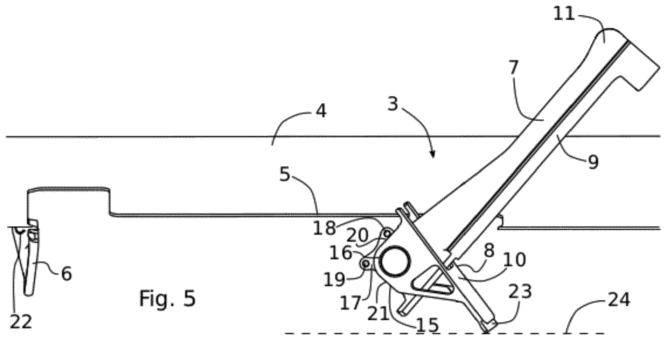

Le capotage profilé 8 du levier d'ouverture 3 est également visible sur la figure 3. Ce capotage 8 est monté pivotant sur l'extrémité du bras principal 7. Ce montage pivotant peut être réalisé par toute liaison pivot et, dans le présent exemple, cette liaison pivot est réalisée de manière simple et fiable par deux flasques 15 parallèles comportant chacune un orifice 16 dont le diamètre est calibré pour un ajustement glissant avec l'arbre de transmission 12. Le capotage 8 est ainsi mobile en rotation par rapport au bras principal 7, autour de l'axe 14, entre une position occultante (figure 3) et une position écartée (visible à la figure 5).

La vue de la figure 2 correspond à la position de repos du levier d'ouverture 3, position dans laquelle la première surface aérodynamique 9 du bras principal 7 et la deuxième surface aérodynamique 10 du capotage profilé 8 sont dans le prolongement l'une de l'autre selon le profil de la paroi externe 4 de la porte 1.

Le levier d'ouverture 3 comporte de plus des butées d'entrainement 18 ainsi que des butées de retour 19, toutes situées sur l'embase 17. Dans le présent exemple, les butées 18, 19 sont constituées par des goupilles emmanchée dans l'embase 17.

La butée d'entrainement 18 est adaptée à coopérer avec des surfaces d'entrainement 20 du capotage 8 de sorte que lorsque le bras principal 7 est actionné en rotation grâce à la poignée 11, son mouvement de rotation entraine, sur une partie de sa course, la rotation du capotage 8.

Les butées de retour 19 sont quant à elles adaptées à coopérer avec des surfaces de retour 21 du capotage 8 de sorte que le capotage 8 est entraîné en rotation par le le bras principal 7 lorsque ce dernier est entraîné en rotation dans le sens inverse à celui du paragraphe précédent. Dans la position de repos du levier d'ouverture 3 illustrée à la figure 2, les butées de retour 19 sont disposées contre les surfaces de retour 21.

La figure 2 représente également le volet occultant 6 montré dans sa position correspondant à celle de la figure 1, ce volet occultant 6 étant monté sur la paroi externe 4 de la porte 1 par un pivot 22.

Les figures 3 à 5 illustrent le fonctionnement du levier d'ouverture 3, la porte 1 étant représentée en coupe partielle pour montrer la coopération des différents éléments du levier d'ouverture 3 et de la paroi externe 4.

Sur la figure 3, le levier d'ouverture 3 est dans sa position de repos, comme sur la figure 1. Dans cette position de repos, le bras principal 7 est dans sa position escamotée, la première surface aérodynamique 9 étant alignée avec la surface de la paroi externe 4.

Des moyens sont prévus pour solliciter élastiquement le bras principal 7 et le capotage profilé 8 vers une position mutuelle où la deuxième surface aérodynamique 10 est rabattue vers la première surface aérodynamique 9 (position visible aux figures 4 et 5). Par exemple, un ressort de torsion peut être placé autour de l'axe 14 pour solliciter ainsi en permanence le capotage profilé 8 vers cette position rabattue en direction du bras principal 7.

Dans cette position de repos du levier d'ouverture 3, le capotage 8 est dans sa position occultante et sa deuxième surface aérodynamique 10 complète l'action de la première surface aérodynamique 9 pour occulter la fenêtre 5. Le capotage 8 comporte une languette 23 destinée à venir en butée contre la paroi externe 4 lorsque la deuxième surface aérodynamique 10 est dans sa position occultante, alignée avec la surface de la paroi externe 4. Le capotage 8 peut ainsi pivoter vers l'intérieur de l'aéronef mais pas vers l'extérieur.

Dans cette position de repos du levier d'ouverture 3, le bras principal 7 est maintenu en position car il est solidaire de l'arbre de transmission 12 tandis que le capotage 8 est maintenu en position par la coopération des butées de retour 19 des surfaces de retour 21 qui sollicitent la languette 23 contre la paroi externe 4. Le ressort de torsion évoqué précédemment entre le bras principal 7 et le capotage 8 complète cette mise en position en sollicitant la languette 23 contre la surface externe 4, évitant ainsi, ou limitant, l'effet des vibrations qui pourraient produire un claquement de la languette 23 contre la paroi externe 4 sous l'effet des jeux mécaniques nécessairement présents entre les pièces.

Sur la figure 3, le volet occultant 6 est en position fermée et est maintenu dans cette position par un ressort (non représenté).

La figure 4 illustre une situation d'actionnement du levier d'ouverture 3 dans laquelle le levier 3 est représenté environ à mi-parcours de sa course angulaire. Entre la position de la figure 3 et la position de la figure 4, le bras principal 7 est sorti de sa position escamotée et a parcouru une certaine course angulaire tandis que le capotage 8 est resté dans sa position occultante. Le bras principal 7 a en effet pivoté autour de l'axe 14 en entraînant en rotation l'arbre de transmission 12 tandis que le ressort de torsion monté entre le bras principal 7 et le capotage 8 maintient le capotage 8 dans sa position occultante en continuant de solliciter la languette 23 contre la paroi externe 4.

À cette course angulaire de la figure 4, les butées d'entrainement 18 viennent au contact des surfaces d'entrainement 20, de sorte que la poursuite de la rotation du bras principal 7 entraînera alors en rotation également le capotage 8.

La figure 5 illustre la position d'ouverture du levier d'ouverture 3, en bout de course angulaire. Entre la position de la figure 4 et la position de la figure 5, le bras principal 7 a continué sa rotation sous l'effet de l'action sur la poignée 11 par l'opérateur situé à l'extérieur de l'aéronef, en entraînant en rotation le capotage 8 sur cette portion de sa course angulaire.

Entre la position de la figure 4 et la position de la figure 5, le capotage 8 est passé de sa position occultante à sa position écartée, libérant ainsi un espace supplémentaire de la fenêtre 5 pour permettre au bras principal 7 de terminer sa longue course angulaire. Dans l'exemple illustré, le bras principal 7 dans sa position déployée a parcouru une course angulaire d'environ 150°. Une course angulaire d'une telle importance permet par exemple de réduire le bras de levier, et donc l'encombrement du levier d'ouverture 3 ou d'augmenter la force d'actionnement du levier d'ouverture 3 pour un même bras de levier.

La ligne pointillée 24 représente schématiquement la distance d'intrusion de la poignée à l'intérieur de la cabine de l'aéronef. Cette distance d'intrusion conditionne la place qu'il est nécessaire de réserver au sein de la structure de la porte 1 pour le fonctionnement du levier d'ouverture 3 et conditionne notamment la taille du caisson étanche qu'il est nécessaire de prévoir contre la paroi externe 4 pour conserver l'étanchéité de la porte 1 malgré la présence du levier d'ouverture 3. Le levier d'ouverture 3 dans sa position d'ouverture illustrée à la figure 5 présente une faible distance d'intrusion tout en permettant une grande course d'actionnement.

Pour la manoeuvre inverse de passage du levier d'ouverture 3 de sa position d'ouverture à sa position de repos, le mouvement est réalisé en sens inverse, de la position de la figure 5 vers la position de la figure 4 puis vers la position de la figure 3. Entre la position de la figure 5 et la position de la figure 4, la rotation du bras principal 7 est accompagnée de la rotation du capotage 8 sous l'effet du ressort de torsion. Si le ressort de torsion n'est pas à même de commander la rotation du capotage 8, la butée de retour 19 viendra alors au contact des surfaces de retour 21 et garantira le retour du capotage 8 à sa position occultante avec la rotation du bras principal 7. À partir de la figure 4, la languette 23 se positionne contre la paroi externe 4 et la poursuite de la rotation du bras principal en direction de la position de la figure 3 est réalisée en comprimant le ressort de torsion jusqu'à ce que les butées de retour 19 viennent en contact contre les surfaces de retour 21.

Des variantes de réalisation de la porte d'aéronef et du levier d'ouverture de secours par l'extérieur 3 peuvent être envisagées sans sortir du cadre de l'invention tel que défini par les revendications. Par exemple, le capotage profilé 8 et la fenêtre 5 peuvent varier en forme et en dimension ainsi que la course angulaire du bras principal 7.

Par ailleurs, le positionnement des butées 18, 19 peut varier, les butées d'entrainement 18 ou de retour 19 pouvant être par exemple placées sur le capotage profilé 8.

## Revendications

1. Porte d'aéronef (1) comportant une structure de porte, une paroi externe (4) fixée sur la structure de porte, et un levier d'ouverture de secours par l'extérieur (3) disposé dans une fenêtre de levier (5) pratiquée dans la paroi externe (4), ce levier d'ouverture de secours par l'extérieur comportant:
- un bras principal (7) muni à l'une de ses extrémités d'une poignée (11) et à l'autre de ses extrémités d'un arbre de transmission de mouvement d'ouverture (12), cet arbre de transmission (12) étant fixe par rapport au bras principal (7), le bras principal (7) comportant une première surface aérodynamique (9) s'étendant de la poignée (11) à l'arbre de transmission (12), l'arbre de transmission (12) étant monté pivotant sur la structure de porte de sorte que le bras principal (7) est mobile entre deux positions :
- une position escamotée dans laquelle la première surface aérodynamique (9) est disposée dans les contours de la fenêtre de levier (5), dans le prolongement de la paroi externe (4) ;
- une position déployée dans laquelle le bras principal (7) est en dehors de la fenêtre de levier (5), cette position déployée correspondant à une configuration d'activation de l'ouverture de secours par l'extérieur ;
- un capotage profilé (8) comportant une deuxième surface aérodynamique (10), ce capotage profilé (8) étant monté pivotant entre :
- une position occultante où la deuxième surface aérodynamique (10) est alignée dans le prolongement de la première surface aérodynamique (9) ;
- une position écartée où la deuxième surface aérodynamique (10) est rabattue en direction de la première surface aérodynamique (9) ;
cette porte d'aéronef étant **caractérisée en ce que** :
- le capotage profilé (8) est monté pivotant sur le bras principal,
et **en ce que** le levier d'ouverture comprend en outre :
- une butée d'entrainement (18) adaptée à entraîner en rotation le capotage profilé (8) de sa position occultante vers sa position écartée lorsque le bras principal (7) passe de sa position escamotée à sa position déployée.

2. Porte d'aéronef selon la revendication 1, **caractérisée en ce que** le levier d'ouverture de secours (3) comporte une surface d'entrainement (20) contre laquelle la butée d'entrainement (18) est adaptée à venir en butée pour l'entrainement en rotation du capotage profilé (8) par le bras principal (7).

3. Porte d'aéronef selon la revendication 2, **caractérisée en ce que** la butée d'entrainement (18) est fixée sur le bras principal (7) et la surface d'entrainement (20) est située sur le capotage profilé (8).

4. Porte d'aéronef selon l'une quelconque des revendications précédentes, **caractérisée en ce que** le levier d'ouverture de secours (3) comporte une butée de retour (19) adaptée à entraîner en rotation le capotage profilé (8) de sa position écartée vers sa position occultante lorsque le bras principal (7) passe de sa position déployée à sa position escamotée.

5. Porte d'aéronef selon la revendication 4, **caractérisée en ce que** le levier d'ouverture de secours (3) comporte une surface de retour (21) contre laquelle la butée de retour (19) est adaptée à venir en butée pour l'entrainement en rotation du capotage profilé (8) par le bras principal (7).

6. Porte d'aéronef selon la revendication 5, **caractérisée en ce que** la butée de retour (19) est fixée sur le bras principal (7) et la surface de retour (21) est située sur le capotage profilé (8).

7. Porte d'aéronef selon l'une quelconque des revendications précédentes, **caractérisée en ce qu'**une liaison pivot entre le bras principal (7) et le capotage profilé (8) comporte deux flasques (15) montés par ajustement glissant sur l'arbre de transmission (12).

8. Porte d'aéronef selon l'une quelconque des revendications précédentes, **caractérisée en ce que** le bras principal (7) comporte une embase (17) sur laquelle sont montés l'arbre de transmission (12) et la butée d'entrainement (18).

9. Porte d'aéronef selon l'une quelconque des revendications précédentes, **caractérisée en ce que** le capotage profilé (8) comporte une languette (23) adaptée à venir en butée contre la paroi externe (4) lorsque le capotage profilé (8) est dans sa position occultante.

10. Porte d'aéronef selon l'une quelconque des revendications précédentes, **caractérisée en ce que** le levier d'ouverture d'urgence (3) comporte un ressort de torsion sollicitant le capotage profilé (8) vers une position où la deuxième surface aérodynamique (10) est rabattue vers la première surface aérodynamique (9).

11. Procédé d'ouverture d'urgence par l'extérieur d'une porte d'aéronef (1) munie d'un levier d'ouverture d'urgence (3) disposé dans une fenêtre de levier (5) de la porte (1) comportant l'étape de pivoter un bras principal (7) du levier d'ouverture d'urgence (3) sur une course angulaire entre une position escamotée et une position déployée, ce procédé étant **caractérisé en ce qu'**au cours de cette course angulaire, le bras principal (7) entraîne en rotation un capotage profilé (8) monté pivotant sur le bras principal (7) entre une position occultante et une position écartée où il est rabattu vers le bras principal (7).

## Patentansprüche

1. Luftfahrzeugtür (1) aufweisend eine Türstruktur, eine Außenwand (4), die an der Türstruktur befestigt ist, und einen Hebel zur Notöffnung von außen (3), der in einem Hebelfenster (5) angeordnet ist, das in der Außenwand (4) ausgebildet ist, wobei dieser Hebel zur Notöffnung von außen Folgendes aufweist:
- einen Hauptarm (7), der an einem seiner Enden mit einem Griff (11) und an dem anderen seiner Enden mit einer Welle zur Übertragung einer Öffnungsbewegung (12) versehen ist, wobei diese Übertragungswelle (12) im Verhältnis zum Hauptarm (7) fest ist, wobei der Hauptarm (7) eine erste aerodynamische Fläche (9) aufweist, die sich von dem Griff (11) zur Übertragungswelle (12) erstreckt, wobei die Übertragungswelle (12) an der Türstruktur so schwenkbar gelagert ist, dass der Hauptarm (7) zwischen zwei Positionen bewegbar ist:
o einer eingefahrenen Position, in der die erste aerodynamische Fläche (9) in den Konturen des Hebelfensters (5) in der Verlängerung der Außenwand (4) angeordnet ist;
o einer ausgefahrenen Position, in der sich der Hauptarm (7) außerhalb des Hebelfensters (5) befindet, wobei diese ausgefahrene Position einer Konfiguration zur Aktivierung der Notöffnung von außen entspricht;
- eine profilierte Verkleidung (8), die eine zweite aerodynamische Fläche (10) aufweist, wobei diese profilierte Verkleidung (8) zwischen folgenden Positionen schwenkbar gelagert ist:
o einer verdeckenden Position, in der die zweite aerodynamische Fläche (10) in der Verlängerung der ersten aerodynamischen Fläche (9) ausgerichtet ist;
o einer abgespreizten Position, in der die zweite aerodynamische Fläche (10) in Richtung der ersten aerodynamischen Fläche (9) geklappt ist;
wobei diese Luftfahrzeugtür **dadurch gekennzeichnet ist, dass**:
- die profilierte Verkleidung (8) am Hauptarm schwenkbar gelagert ist,
und dadurch, dass der Öffnungshebel ferner Folgendes umfasst:
- einen Mitnahmeanschlag (18), der geeignet ist, die profilierte Verkleidung (8) aus ihrer verdeckenden Position zu ihrer abgespreizten Position hin in Drehung zu versetzen, wenn der Hauptarm (7) aus seiner eingefahrenen Position in seine ausgefahrene Position wechselt.

2. Luftfahrzeugtür nach Anspruch 1, **dadurch gekennzeichnet, dass** der Notöffnungshebel (3) eine Mitnahmefläche (20) aufweist, an welcher der Mitnahmeanschlag (18) geeignet ist, anzuliegen, um die profilierte Verkleidung (8) durch den Hauptarm (7) in Drehung zu versetzen.

3. Luftfahrzeugtür nach Anspruch 2, **dadurch gekennzeichnet, dass** der Mitnahmeanschlag (18) am Hauptarm (7) befestigt ist und sich die Mitnahmefläche (20) auf der profilierten Verkleidung (8) befindet.

4. Luftfahrzeugtür nach einem der vorhergehenden Ansprüche, **dadurch gekennzeichnet, dass** der Notöffnungshebel (3) einen Rückführanschlag (19) aufweist, der geeignet ist, die profilierte Verkleidung (8) aus ihrer abgespreizten Position zu ihrer verdeckenden Position hin in Drehung zu versetzen, wenn der Hauptarm (7) aus seiner ausgefahrenen Position in seine eingefahrene Position wechselt.

5. Luftfahrzeugtür nach Anspruch 4, **dadurch gekennzeichnet, dass** der Notöffnungshebel (3) eine Rückführfläche (21) aufweist, an welcher der Rückführanschlag (19) geeignet ist, anzuliegen, um die profilierte Verkleidung (8) durch den Hauptarm (7) in Drehung zu versetzen.

6. Luftfahrzeugtür nach Anspruch 5, **dadurch gekennzeichnet, dass** der Rückführanschlag (19) am Hauptarm (7) befestigt ist und sich die Rückführfläche (21) auf der profilierten Verkleidung (8) befindet.

7. Luftfahrzeugtür nach einem der vorhergehenden Ansprüche, **dadurch gekennzeichnet, dass** eine Schwenkverbindung zwischen dem Hauptarm (7) und der profilierten Verkleidung (8) zwei Flansche (15) aufweist, die durch Gleitpassung an der Übertragungswelle (12) angebracht sind.

8. Luftfahrzeugtür nach einem der vorhergehenden Ansprüche, **dadurch gekennzeichnet, dass** der Hauptarm (7) einen Fuß (17) aufweist, an dem die Übertragungswelle (12) und der Mitnahmeanschlag (18) angebracht sind.

9. Luftfahrzeugtür nach einem der vorhergehenden Ansprüche, **dadurch gekennzeichnet, dass** die profilierte Verkleidung (8) eine Lasche (23) aufweist, die geeignet ist, an der Außenwand (4) anzuliegen, wenn sich die profilierte Verkleidung (8) in ihrer verdeckenden Position befindet.

10. Luftfahrzeugtür nach einem der vorhergehenden Ansprüche, **dadurch gekennzeichnet, dass** der Notöffnungshebel (3) eine Drehfeder aufweist, die die profilierte Verkleidung (8) in Richtung einer Position vorspannt, in der die zweite aerodynamische Fläche (10) in Richtung der ersten aerodynamischen Fläche (9) geklappt ist.

11. Verfahren zur Notöffnung von außen für eine Luftfahrzeugtür (1), die mit einem Notöffnungshebel (3) versehen ist, der in einem Hebelfenster (5) der Tür (1) angeordnet ist, aufweisend den Schritt des Schwenkens eines Hauptarms (7) des Notöffnungshebels (3) über eine Winkelstrecke zwischen einer eingefahrenen Position und einer ausgefahrenen Position, wobei das Verfahren **dadurch gekennzeichnet ist, dass** im Verlauf dieser Winkelstrecke der Hauptarm (7) eine profilierte Verkleidung (8), die an dem Hauptarm (7) schwenkbar gelagert ist, zwischen einer verdeckenden Position und einer abgespreizten Position, in der sie in Richtung des Hauptarms (7) geklappt ist, in Drehung versetzt.

## Claims

1. An aircraft door (1) having a door structure, an external wall (4) fixed to the door structure, and a lever (3) for emergency opening from the outside, which is disposed in a lever window (5) formed in the external wall (4), this lever (3) for emergency opening from the outside having:
• a main arm (7) provided at one of its ends with a handle (11) and at the other one of its ends with an opening-movement transmission shaft (12), this transmission shaft (12) being fixed with respect to the main arm (7), the main arm (7) having a first aerodynamic surface (9) extending from the handle (11) to the transmission shaft (12), the transmission shaft (12) being mounted so as to be pivotable on the door structure in such a way that the main arm (7) can be moved between two positions:
- a retracted position, in which the first aerodynamic surface (9) is disposed in the contours of the lever window (5), in the continuation of the external wall (4);
- a deployed position, in which the main arm (7) is outside the lever window (5), this deployed position corresponding to a configuration of activation of the emergency opening from the outside;
• a profiled cowl (8) having a second aerodynamic surface (10), this profiled cowl (8) being mounted so as to be pivotable between:
- a concealing position, in which the second aerodynamic surface (10) is aligned in the continuation of the first aerodynamic surface (9);
- a swung-out position, in which the second aerodynamic surface (10) is folded in the direction of the first aerodynamic surface (9);
this aircraft door (1) being **characterized in that**:
• the profiled cowl (8) is mounted to be pivotable on the main arm (7), and **in that** the opening lever further comprises :
• a driving abutment (18) suitable for rotating the profiled cowl (8) from its concealing position into its swung-out position when the main arm (7) moves from its retracted position to its deployed position.

2. The aircraft door as claimed in claim 1, **characterized in that** the emergency opening lever (3) has a drive surface (20) against which the driving abutment (18) is designed to butt for the purpose of rotating the profiled cowl (8) by way of the main arm (7).

3. The aircraft door as claimed in claim 2, **characterized in that** the driving abutment (18) is fixed to the main arm (7) and the drive surface (20) is located on the profiled cowl (8).

4. The aircraft door as claimed in any one of the preceding claims, **characterized in that** the emergency opening lever (3) has a return abutment (19) suitable for rotating the profiled cowl (8) from its swung-out position toward its concealing position when the main arm (7) moves from its deployed position to its retracted position.

5. The aircraft door as claimed in claim 4, **characterized in that** the emergency opening lever (3) has a return surface (21) against which the return abutment (19) is designed to butt for the purpose of rotating the profiled cowl (8) by way of the main arm (7).

6. The aircraft door as claimed in claim 5, **characterized in that** the return abutment (19) is fixed to the main arm (7) and the return surface (21) is located on the profiled cowl (8).

7. The aircraft door as claimed in any one of the preceding claims, **characterized in that** a pivot connection between the main arm (7) and the profiled cowl (8) has two flanges (15) mounted by a sliding fit on the transmission shaft (12).

8. The aircraft door as claimed in any one of the preceding claims, **characterized in that** the main arm (7) has a base (17) on which the transmission shaft (12) and the driving abutment (18) are mounted.

9. The aircraft door as claimed in any one of the preceding claims, **characterized in that** the profiled cowl (8) has a tongue (23) designed to butt against the external wall (4) when the profiled cowl (8) is in its concealing position.

10. The aircraft door as claimed in any one of the preceding claims, **characterized in that** the emergency opening lever (3) has a torsion spring that urges the profiled cowl (8) toward a position in which the second aerodynamic surface (10) is folded toward the first aerodynamic surface (9).

11. A method for the emergency opening from the outside of an aircraft door (1) provided with an emergency opening lever (3) disposed in a lever window (5) of the door (1), having the step of pivoting a main arm (7) of the emergency opening lever (3) over an angular travel between a retracted position and a deployed position, this method being **characterized in that** in the course of this angular travel, the main arm (7) rotates a profiled cowl (8) mounted so as to be pivotable on the main arm (7) between a concealing position and a swung-out position, in which it is folded toward the main arm (7).
